Europäisches Patentamt

European Patent Office

Office européen des brevets

(19)

(11) Veröffentlichungsnummer : **0 146 124**
**B1**

(12) **EUROPÄISCHE PATENTSCHRIFT**

(45) Veröffentlichungstag der Patentschrift :
03.01.90

(51) Int. Cl.$^5$ : **B 01 D 53/04**

(21) Anmeldenummer : **84115393.5**

(22) Anmeldetag : **13.12.84**

(54) Druckwechseladsorptionsverfahren.

(30) Priorität : 20.12.83 DE 3346032

(43) Veröffentlichungstag der Anmeldung :
26.06.85 Patentblatt 85/26

(45) Bekanntmachung des Hinweises auf die Patenterteilung : 03.01.90 Patentblatt 90/01

(84) Benannte Vertragsstaaten :
AT BE DE FR GB IT NL

(56) Entgegenhaltungen :
EP—A— 0 011 872
EP—A— 0 086 436
DE—A— 2 624 346
DE—A— 3 006 836
US—A— 3 430 418
US—A— 3 564 816
US—A— 4 077 779
US—A— 4 375 363

(73) Patentinhaber : **Linde Aktiengesellschaft**
**Abraham-Lincoln-Strasse 21**
**D-6200 Wiesbaden (DE)**

(72) Erfinder : **Benkmann, Christian, Dipl.-Ing.**
**Meisenstrasse 39**
**D-8032 Gräfelfing (DE)**

(74) Vertreter : **Schaefer, Gerhard, Dr.**
**Linde Aktiengesellschaft Zentrale Patentabteilung**
**D-8023 Höllriegelskreuth (DE)**

EP 0 146 124 B1

## Beschreibung

Die Erfindung betrifft ein Druckwechseladsorptionsverfahren zur Reinigung oder Zerlegung eines Gasstroms unter Verwendung von sechs im zyklischen Wechsel betriebenen Adsorbern, bei dem der Gasstrom während einer Adsorptionsphase beim höchsten Verfahrensdruck durch einen Adsorber geleitet und gereinigtes bzw. zerlegtes Gas vom Austrittsende des Adsorbers abgezogen wird, wobei nach Beendigung der Adsorptionsphase der Adsorber einer mehrstufigen Gleichstromentspannung unterzogen wird und die dabei anfallenden Entspannungsgase teils zum Druckaufbau anderer, zuvor gespülter Adsorber und teils zum Spülen eines anderen, auf niedrigstem Verfahrensdruck befindlichen Adsorbers verwendet werden, wonach eine Gegenstromentspannung auf den niedrigsten Verfahrensdruck und eine Spülung mit Gleichstromentspannungsgas aus einem anderen Adsorber folgt und sich ein mehrstufiges Aufdrücken auf den Adsorptionsdruck mit Gleichstromentspannungsgas und gereinigtem bzw. zerlegtem Produktgas anschließt.

Ein Verfahren dieser Art ist schon aus der DE-A 28 51 847 bekannt. Das dort in der Figur 5 dargestellte Verfahrensschema bezieht sich auf eine Anlage mit sechs Adsorbern, wobei sich die Adsorptionsphasen von jeweils drei Adsorbern zeitlich überlappen. Die Gleichstromentspannung erfolgt in zwei Stufen, wobei in einer ersten Phase ein Druckausgleich mit einem anderen, eine Druckaufbauphase durchlaufenden Adsorber erfolgt, während in einer zweiten Phase Spülgas für einen weiteren Adsorber, der dann gerade gespült wird, anfällt. Nach der anschließenden Gegenstromentspannung und Spülung erfolgt ein zweistufiger Druckaufbau, zunächst mit Entspannungsgas aus einem dann in einer Gleichstromentspannungsphase befindlichen Adsorber und schließlich mit Produktgas.

Weiterhin ist aus der DE-A 26 24 346 ein Druckwechseladsorptionsverfahren mit neun Adsorbern bekannt, bei dem es ebenfalls wesentlich ist, daß mindestens drei Adsorber gleichzeitig in Adsorption betrieben werden. Bei diesem Verfahren sind innerhalb eines Zyklus für jeden Adsorber vier Gleichstromentspannungsstufen, von denen drei im Druckausgleich mit aufzudrückenden Adsorbern durchgeführt werden, vorgesehen. Schließlich gibt es noch eine Reihe von Druckwechseladsorptionsverfahren, die unter Verwendung von zwei bis maximal fünf Adsorbern betrieben werden und denen gemeinsam ist, daß jeweils nur ein Adsorber eine Adsorptionsphase durchläuft. Dies ist bei solchen Verfahren nötig, da anderenfalls die übrigen elementaren Verfahrensschritte nicht durchgeführt werden könnten. Beispielhaft für solche Verfahren sei auf die US-Patentschriften 3 430 418 und 3 564 816 hingewiesen.

Aus dem bekannten Stand der Technik ergibt sich somit die Lehre, daß bei Verwendung von mehr als fünf Adsorbern jeweils mehrere Adsorber gleichzeitig in einer Adsorptionsphase betrieben werden. Dies wird auch in der DE-C 30 06 836 ausdrücklich festgestellt. Die parallele Adsorption in mehreren Adsorbern wurde im Hinblick auf die konstante Menge sowohl des Produktgases als auch des Restgasstromes, also des Gegenstromentspannungsgases sowie des mit desorbierten Komponenten beladenen Spülgases, als besonders erstrebenswert angesehen.

Demgegenüber steht die Lehre der US-A-4 077 779, welche sich mit dem Betrieb einer Sechs-Adsorber-Gruppe befaßt. Für die Gewinnung des nicht adsorbierten Produktes wird nur jeweils ein Adsorber in Adsorption betrieben. Zur Erzielung einer hohen Produktreinheit und Produktausbeute weicht dieses bekannte Verfahren jedoch wesentlich von den vorgenannten Verfahrensführungen ab. So gestaltet sich das Taktschema eines Adsorbers wie folgt: Auf die Adsorption bei erhöhtem Druck folgen eine Gleichstromspülung bei erhöhtem Druck mit adsorbierter Komponente zur Verdrängung von Lückenvolumengas und gleichzeitiger Aufsättigung des Adsorbers. Daran anschließend erfolgt eine Gegenstromentspannung zur Gewinnung der adsorbierten Komponente, eine Gegenstromspülung mit Fremdgas, Evakuierung zur Entfernung von Restverunreinigungen und eine Wiederaufdrückphase mit nicht adsorbierentem Produktgas eines Adsorbers in Adsorption.

Der Erfindung lag die Aufgabe zugrunde, ein Verfahren der eingangs genannten Art so weiterzuentwickeln, daß nicht nur eine konstante und gleichmäßige Gasmenge anfällt, sondern daß daneben auch ein energetisch besonders günstiger Betrieb möglich ist.

Diese Aufgabe wird dadurch gelöst, daß sich jeweils nur ein Adsorber in einer Adsorptionsphase befindet und daß vier oder fünf Gleichstromentspannungsphasen vorgesehen sind, von denen die ersten drei Gleichstromentspannungsphasen im Druckausgleich mit jeweils anderen Adsorbern durchgeführt werden und die vierte Gleichstromentspannungsphase Spülgas liefert.

In bewußter Abkehr von der üblichen Verfahrensweise wird beim erfindungsgemäßen Verfahren die Möglichkeit, mehrere Adsorber gleichzeitig in einer Adsorptionsphase zu betreiben, nicht genutzt und jeweils nur ein Adsorber in einer Adsorptionsphase betrieben. Dies ermöglicht, die Zahl der Druckausgleichsstufen gegenüber dem bekannten sechs-Adsorber-Verfahren um zwei oder sogar drei Stufen zu erhöhen. Der dadurch erzielbare Vorteil ist insbesondere darin zu sehen, daß das Produktgas, also das nicht adsorbierte Gas, in höherer ·Ausbeute gewonnen werden kann, da bei steigender Zahl von Druckausgleichsstufen der Verlust der Produktkomponente im Restgas verringert wird. Außerdem wird durch die Erhöhung der Anzahl der Druckausgleichsstufen das Druckpotential der Entspannungsgase in höherem Ausmaß genutzt.

Überraschenderweise hat sich gezeigt, daß beim Betrieb einer sechs-Adsorber-Anlage mit jeweils nur einem Adsorber in Adsorption keine Schwierigkeiten hinsichtlich der Menge des Produktgases und des

Restgases auftreten, sondern daß die Konstanz dieser Ströme durch relativ einfache Regelungsmaßnahmen gewährleistet werden kann. Um auch dann eine konstante Produktmenge abzuführen, wenn die letzte Phase des Wiederaufdrückens eines Adsorbers mit Produktgas kürzer ist als die Adsorptionsphase, wenn also nur während eines Teils der Adsorptionsphase Produktgas für dieses Aufdrücken abgezweigt werden muß, kann man entweder einen Pufferbehälter für das Produktgas vorsehen oder, was in der Regel günstiger, da ohne zusätzliche Investitionen möglich ist, einen Teil des Produktgases schon während einer vorausgehenden Druckaufbaustufe zusammen mit Gleichstromentspannungsgas aus einem anderen Adsorber in einen dann in einer Druckaufbauphase durch Druckausgleich befindlichen weiteren Adsorber leiten. Hierfür eignet sich am besten ein Adsorber, der gerade die letzte durch Druckausgleich erfolgende Aufdrückphase durchläuft, da das zusätzlich eingeleitete Produktgas dann den geringsten Druckverlust erleidet und außerdem die Einleitung von Produktgas über das Austrittsende des aufzudrückenden Adsorbers die besonders wichtige vollständige Reinhaltung des Adsorberaustrittsendes von adsorbierbaren Komponenten unterstützt, denn solche gegebenenfalls noch im aufzudrückenden Adsorber vorhandenen Komponenten werden dann in besonders ausgeprägter Weise zum Eintrittsende dieses Adsorbers zurückgedrängt. Bei einer solchen Verfahrensweise kann es auch günstig sein, die letzte im Druckausgleich vorgenommene Druckaufbauphase relativ kurz und die anschließend mit Produktgas durchzuführende Druckaufbauphase relativ lang zu gestalten, da dann einerseits bei einem relativ langsam vorzunehmenden Aufdrücken mit Produktgas nur ein geringer Teilstrom des Produkts hierfür abgezweigt werden muß und andererseits auch während der vorhergehenden letzten, durch Druckausgleich erfolgenden Druckaufbauphase nur ein entsprechend geringer Teilstrom des Produktstroms abgezweigt werden muß, was wiederum mit einem nur geringen Verlust an Druckpotential verbunden ist.

Zur Einstellung eines konstanten Restgasstroms bei Anwendung der Erfindung kann wiederum ein Vorbehälter in der Restgasleitung oder eine einfache Regelung vorgesehen werden. Eine Regelungsmöglichkeit ist beispielsweise dadurch gegeben, daß das während einer Gegenstromentspannungsphase abgezogene Restgas durch ein in der Restgasleitung vorgesehenes Regelventil auf einen konstanten Strom eingestellt wird, und daß das während einer Spülphase anfallende Restgas durch Regelung des dem zu spülenden Adsorber zuzuführenden Spülgases über ein in der Spülgasleitung angeordnetes Regelventil auf einen solchen Wert eingestellt wird, daß ein zeitlich konstanter Restgasstrom aus dem zu spülenden Adsorber austritt.

In einer ersten Ausführungsform der Erfindung sind vier Gleichstromentspannungsphasen vorgesehen. Dabei werden im Hinblick auf eine hohe Produktausbeute und gute Nutzung des Druckpotentials, die ersten drei Gleichstromentspannungsphasen im Druckausgleich mit jeweils anderen aufzudrückenden Adsorbern durchgeführt und das für die Spülung eines weiteren Adsorbers benötigte Gleichstromentspannungsgas aus der vierten Gleichstromentspannungsphase bezogen.

In der zweiten Ausführungsform der Erfindung mit fünf Gleichstromentspannungsphasen hat es sich als günstig erwiesen, das Entspannungsgas aus den ersten drei und der fünften Gleichstromentspannungsphase zum Druckaufbau anderer Adsorber heranzuziehen, während mit dem vierten Gleichstromentspannungsgas gespült wird. Das in der fünften Gleichstromentspannungsphase anfallende Gas wird dabei vorzugsweise für die erste Druckaufbauphase eines unmittelbar zuvor gespülten Adsorbers verwendet.

Das erfindungsgemäße Verfahren kann bei einer Vielzahl von Gastrennprozessen eingesetzt werden, beispielsweise für die Luftzerlegung, die Gewinnung von Edelgasen, die Reinigung von Erdgas und insbesondere für die Reinigung von Synthesegasen zur Gewinnung eines Wasserstoffstroms. Die Adsorption kann dabei jeweils unter Wahl eines beliebigen, für den speziellen Trennprozeß geeigneten Adsorptionsmittels, beispielsweise Aktivkohle, Silikagel, Alugel oder Molekularsiebe, durchgeführt werden. Die beim erfindungsgemäßen Verfahren zu verarbeitenden Gasströme können mengenmäßig innerhalb einer großen Bandbreite liegen. So eignet sich das erfindungsgemäße Verfahren beispielsweise bei der Gewinnung von Reinwasserstoff insbesondere für Gasströme zwischen etwa 2 000 und 50 000 Nm³/h, wobei die Obergrenze bei Einhaltung üblicher Baugröße strömungsmäßig bedingt ist, während bei Unterschreiten der Untergrenze zu prüfen ist, ob nicht einfachere Verfahren mit weniger Adsorbern und geringerer Produktausbeute insgesamt wirtschaftlicher sind. Aus technischen Gründen kann die Untergrenze jedoch sehr viel weiter herabgesetzt werden, wobei auch die Bewertung des Produktgases eine Rolle spielt. So ist es beispielsweise bei der Reinigung von Helium schon sinnvoll, das Verfahren bei Gasmengen ab etwa 50 Nm³/h einzusetzen.

Weitere Einzelheiten der Erfindung werden nachfolgend anhand der in den Figuren schematisch dargestellten Ausführungsbeispiele erläutert.

Es zeigen :

Figur 1 eine Anlage zur Durchführung der Erfindung,

Figuren 2 und 3 zwei Taktschemata für die Durchführung des Verfahrens in einer Anlage gemäß Figur 1.

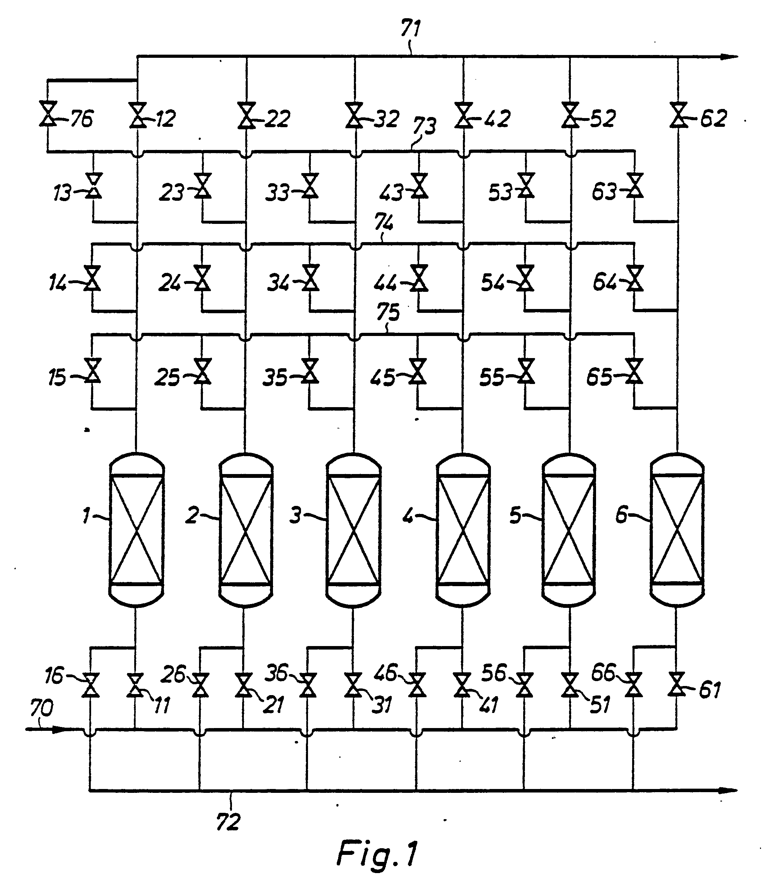

In der in Figur 1 gezeigten Anlage sind die sechs Adsorber mit den Ziffern 1 bis 6 gekennzeichnet. Dem Adsorber 1 sind auf der Rohgas-Eintrittsseite Ventile 11 und 16 sowie auf der Produktgas-Austrittsseite Ventile 12, 13, 14 und 15 zugeordnet. In entsprechender Weise sind den Adsorbern 2 bis 6 Ventile 21-26 bis 61-66 zugeordnet. Die Anlage enthält eine Rohgas-Zuführungsleitung 70, die über die

# EP 0 146 124 B1

Ventile 11 bis 61 mit den Adsorbern 1 bis 6 verbunden werden kann, sowie eine Produktgasleitung 71, die über die Ventile 12 bis 62 mit den Austrittsenden der Adsorber 1 bis 6 verbunden werden kann. Außerdem ist eine Restgasleitung 72 vorgesehen, die über die Ventile 16 bis 66 mit den Eintrittsenden der Adsorber 1 bis 6 verbunden werden kann, und schließlich sind Leitungen 73, 74 und 75 vorgesehen, die über die Ventile 13 bis 63, 14 bis 64 bzw. 15 bis 65 mit den Austrittsenden der Adsorber 1 bis 6 verbunden werden können. Die Leitungen 73 und 74 sind Druckausgleichsleitungen, während 75 eine Spülgasleitung ist. Sofern das Verfahren mit vier Druckausgleichsstufen durchgeführt wird, wird über Leitung 75 zusätzlich noch ein Druckausgleich vorgenommen. Die Leitung 73 ist über Ventil 76 mit der Produktgasleitung 71 verbunden.

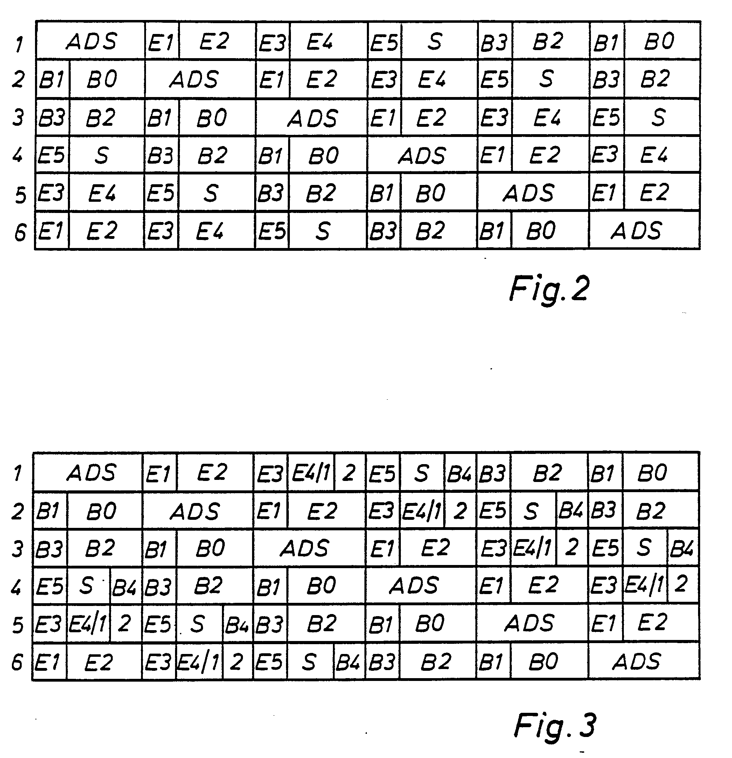

Die während eines vollständigen Schaltzyklus nacheinander in den einzelnen Adsorbern ablaufenden Vorgänge seien anhand des Adsorbers 1 erläutert, wobei zunächst angenommen wird, daß gemäß dem in Figur 2 dargestellten Taktschema mit drei Druckausgleichsstufen gearbeitet wird. Die in Klammern hinzugefügten Angaben ADS, E1 bis E5, S, B0 bis B3 beziehen sich auf Figur 2.

Das zu zerlegende bzw. zu reinigende Rohgas gelangt über Leitung 70 und das geöffnete Ventil 11 in den Adsorber 1. Im Adsorber 1 werden die leichter adsorbierbaren Komponenten festgehalten, während nicht adsorbierte Bestandteile austreten und über das geöffnete Ventil 12 in die Produktgasleitung 71 abgegeben werden. Die Adsorptionsphase (ADS) wird solange fortgesetzt, bis ein gewünschter Beladungszustand des Adsorbers 1 erreicht ist, wonach die Ventile 11 und 12 geschlossen und die Ventile 21 und 22 geöffnet werden, so daß die Adsorption unter kontinuierlicher Produktabgabe über Leitung 71 im Adsorber 2 fortgesetzt wird. Im Adsorber 1 wird nunmehr der Druck auf einen ersten Zwischendruck gesenkt (E1). Dies geschieht durch Druckausgleich mit dem Adsorber 3 über Leitung 73 und die geöffneten Ventile 13 und 33. Der Adsorber 3 durchläuft während dieser Phase seine dritte Druckausgleichs-Aufdrückphase B1. Nach erfolgtem Druckausgleich wird Ventil 13 geschlossen und die Ventile 14 und 44 geöffnet, so daß der Adsorber 1 über Leitung 74 weiteres Gleichstromentspannungsgas in den Adsorber 4, der gerade seine zweite Druckaufbauphase (B2) durchläuft, abgibt. Nach Beendigung dieses Druckausgleichs wird das Ventil 44 geschlossen und Ventil 54 geöffnet, so daß weiteres Gleichstromentspannungsgas aus dem Adsorber 1 über Leitung 74 abgezogen und nunmehr in den Adsorber 5 eingeleitet wird. Der Adsorber 5 durchläuft dabei seine erste Druckaufbaustufe B3. Nach Beendigung dieses dritten Druckausgleichs wird Ventil 14 geschlossen und über das jetzt geöffnete Ventil 15 ein letztes Gleichstromentspannungsgas in Leitung 75 abgegeben. Dieses Gas wird als Spülgas über das geöffnete Ventil 65 durch den Adsorber 6 geführt und nach Beladung mit desorbierten Komponenten über das Ventil 66 in die Restgasleitung 72 geleitet. Nach Beendigung der Spülphase wird Ventil 15 geschlossen und der Adsorber 1 durch öffnen des Ventils 16 im Gegenstrom zur Adsorptionsrichtung auf den niedrigsten Verfahrensdruck entspannt (E5). Anschließend erfolgt die Spülung (S) des Adsorbers 1 mit Entspannungsgas aus dem Adsorber 2, der gerade seine vierte Gleichstromentspannungsphase (E4) durchläuft, wozu die Ventile 15 und 25 geöffnet werden. Das mit desorbierten Anteilen beladene Spülgas wird über das geöffnete Ventil 16 in die Restgasleitung 72 abgegeben. Nach erfolgter Spülung muß der Adsorber 1 wieder auf den Adsorptionsdruck aufgedrückt werden. Dies geschieht zunächst durch einen ersten Druckaufbau (B3) im Druckausgleich mit dem Adsorber 3 über die Leitung 74, wozu bei nunmehr geschlossenem Ventil 16 die Ventile 14 und 34 geöffnet werden. Nach diesem ersten Druckausgleich wird der Adsorber 1 bei weiterhin geöffnetem Ventil 14 und geschlossenem Ventil 34, aber nunmehr geöffnetem Ventil 44 über Leitung 74 einem zweiten Druckausgleich ausgesetzt, diesmal mit dem Adsorber 4, der gerade seine zweite Gleichstromentspannungsphase (E2) durchläuft. Nach Beendigung dieser zweiten Aufdrückphase (B2) wird Ventil 14 geschlossen und ein dritter Druckausgleich mit dem Adsorber 5 über Leitung 73 und die geöffneten Ventile 13 und 53 eingeleitet. Während dieser Aufdrückphase (B1) des Adsorbers 1 durchläuft der Adsorber 5 seine erste Gleichstromentspannungsphase (E1). Schließlich wird der Adsorber 1 nach Schließung des Ventils 53 mit Produktgas aus Leitung 71, das über die Ventile 76 und 13 zum Austrittsende des Adsorbers 1 geführt wird, wieder auf Adsorptionsdruck gebracht, wonach der Zyklus von neuem beginnen kann.

Jeder Adsorber wird während 1/6 der Zyklusdauer in einer Adsorptionsphase (ADS) betrieben. Während der Adsorber 1 seine Adsorptionsphase durchläuft, befindet sich der Adsorber 2 zunächst in der Druckaufbauphase B1 und dann in der Druckaufbauphase B0, der Adsorber 3 zunächst in der Druckaufbauphase B3 und dann in der Druckaufbauphase B2, der Adsorber 4 zunächst in der Gegenstromentspannungsphase E5 und dann in der Spülphase S, der Adsorber 5 in der Gleichstromentspannungsphase E3 und dann in der Gleichstromentspannungsphase E4 und schließlich der Adsorber 6 zunächst in der Gleichstromentspannungsphase E1 und dann in der Gleichstromentspannungsphase E2.

Damit jeder Adsorber während der Dauer seiner gesamten Adsorptionsphase eine konstante Produktmenge über Leitung 71 abgibt, wird nicht nur während der Phase B0 Produktgas über das geöffnete Ventil 76 in den jeweils aufzudrückenden Adsorber geführt, sondern es wird auch schon während der im Druckausgleich erfolgenden Aufdrückphase B1 das Ventil 76 geöffnet. Dabei wird durch eine in der Figur nicht dargestellte übliche Regelungsmaßnahme eine solche Menge an Produktgas über Ventil 76 zum Druckaufbau mitabgezweigt, daß der über Leitung 71 abgezogene Produktgasstrom konstant bleibt.

Das in der Figur 3 dargestellte Taktschema enthält vier Druckausgleichsstufen und fünf Gleichstromentspannungsphasen. Die Wahl von vier Druckausgleichsstufen bietet sich insbesondere dann an,

4

wenn ein hohes Druckverhältnis zwischen dem Adsorptionsdruck und dem Restgasdruck besteht, beispielsweise ein Druckverhältnis von 15 oder mehr. Die Verfahrensführung entspricht weitgehend derjenigen des in der Figur 2 dargestellten Taktschemas, so daß statt einer ausführlichen Erläuterung nur die Unterschiede hierzu aufgezeigt werden sollen. Im Unterschied zum vorbeschriebenen Taktschema wird hier die vierte Gleichstromentspannungsphase (E4) in zwei Einzelschritte E41 und E42 unterteilt. Die Spülung (S) des korrespondierenden Adsorbers erfolgt nur noch während der Entspannungsphase E41, während der unmittelbar zuvor gespülte Adsorber während der Entspannungsphase E42 einem ersten Druckausgleich (B4) ausgesetzt wird. Anhand des Adsorbers 1, der in der Figur 1 dargestellten Anlage bedeutet dies, daß während der Gleichstromentspannungsphase E41 Entspannungsgas über das geöffnete Ventil 15 und Leitung 75 in den Adsorber 6 geleitet wird, wozu die Ventile 65 und 66 geöffnet sind, so daß das Restgas über Leitung 72 abgezogen werden kann. Nach Beendigung der Entspannungsphase E41 wird das Entspannungsgas in der Phase E42 weiterhin über Leitung 75 und die geöffneten Ventile 15 und 65 in den Adsorber 6 geleitet, jedoch ist Ventil 66 nunmehr geschlossen.

Die Dauer eines vollständigen Zyklus kann bei beiden Taktschemata in den für Druckwechseladsorptionsverfahren üblichen Bereichen variieren, typische Zykluszeiten liegen im Bereich einiger Minuten bis zu etwa 30 Minuten, beispielsweise bei 24 Minuten.

Nachfolgend werden anhand eines Vergleichsbeispiels die Vorteile des erfindungsgemäßen Verfahrens sowohl gegenüber einem Verfahren mit sieben Adsorbern, von denen zwei gleichzeitig in Adsorption sind und bei dem drei Druckausgleiche vorgesehen sind, als auch gegenüber einem Verfahren mit fünf Adsorbern, wobei jeweils nur ein Adsorber gleichzeitig in Adsorption betrieben wird und wie es aus der US-A 3 564 816 bekannt ist, aufgezeigt.

Ausgegangen wurde in allen drei Fällen von der Wasserstoffgewinnung aus einem Steamreformer-Gas, das 75 Vol-%, Wasserstoff, 5 Vol-% Kohlenmonoxid, 5 Vol-% Methan und 15 Vol-% Kohlendioxid enthält. Die gewünschte Wasserstoffproduktmenge liegt in allen Fällen bei 10 000 Nm³/h mit einer Wasserstoffreinheit von 99,999 Vol-%. Der Rohgasdruck beträgt 20 bar, der Restgasdruck 1,3 bar und die Rohgastemperatur 303 K.

Mit dem erfindungsgemäßen Verfahren mit drei Druckausgleichen, wie es in der Figur 2 dargestellt ist, wird eine Rohgasmenge von 15 504 Nm³/h benötigt, das entspricht einer Wasserstoffausbeute von 86 %. Eine vergleichbar hohe Wasserstoffausbeute konnte bisher nur unter Verwendung eines Verfahrens mit mindestens sieben Adsorbern erreicht werden, was einen bedeutenden Mehraufwand an Behältern und Ventilen erfordert. Das Verfahren mit fünf Adsorbern erreicht dagegen nur eine Wasserstoffausbeute von 81 %. Die Investitionskosten für die Druckwechseladsorptionsanlage sind in diesem Fall zwar niedriger, die Einsparungen werden aber durch die höheren Investitionskosten beim Gaserzeuger, der zur Erreichung der gleichen Wasserstoff-Produktmenge etwa 6 % größer sein muß, als beim erfindungsgemäßen Verfahren sowie durch die höheren Betriebskosten mehr als kompensiert.

Die wesentlichen Vergleichsdaten zwischen den drei Verfahren sind in der nachstehenden Tabelle angegeben.

| | 6-Adsorber | 7-Adsorber | 5-Adsorber |
|---|---|---|---|
| Rohgasmenge, Nm³/h | 15504 | 15504 | 16461 |
| H$_2$-Ausbeute, % | 86 | 86 | 81 |
| relatives Adsorbersvolumen der Gesamtanlage bei gleichen Zeiten für den Entspannungs- Spül- und Bespannungsvorgang | 100 | 116 | 110 |
| Adsorberanzahl | 6 | 7 | 5 |
| Anzahl der Schaltventile | 36 | 42 | 30. |

**Patentansprüche**

1. Druckwechsel-Adsorptionsverfahren zur Reinigung oder Zerlegung eines Gasstroms unter Verwendung von 6 im zyklischen Wechsel betriebenen Adsorbern, bei dem der Gasstrom während einer Adsorptionsphase beim höchsten Verfahrensdruck durch einen Adsorber geleitet und gereinigtes Gas bzw. zerlegtes Gas vom Austrittsende des Adsorbers abgezogen wird, wobei nach Beendigung der Adsorptionsphase der Adsorber einer mehrstufigen Gleichstromentspannung unterzogen wird und die dabei anfallenden Entspannungsgase teils zum Druckaufbau anderer, zuvor gespülter Adsorber und teils zum Spülen eines anderen, auf niedrigstem Verfahrensdruck befindlichen Adsorber verwendet werden, wonach eine Gegenstromentspannung auf den niedrigsten Verfahrensdruck und eine Spülung mit Gleichstromentspannungsgas aus einem anderen Adsorber folgt und sich ein mehrstufiges Aufdrücken auf den Adsorptionsdruck mit Gleichstromentspannungsgas und gereinigtem bzw. zerlegtem Produktgas anschließt, dadurch gekennzeichnet, daß sich jeweils nur ein Adsorber in einer Adsorptionsphase befindet und daß vier oder fünf Gleichstromentspannungsphasen vorgesehen sind, von denen die ersten drei Gleichstromentspannungsphasen im Druckausgleich mit jeweils anderen Adsorbern durchgeführt werden und die vierte Gleichstromentspannungsphase Spülgas liefert.

2. Verfahren nach Anspruch 1, dadurch gekennzeichnet, daß ein gespülter Adsorber durch nacheinander erfolgendes Einleiten von Gleichstromentspannungsgas aus der dritten, dann der zweiten und schließlich der ersten Gleichstromentspannungsphase aus drei verschiedenen Adsorbern und schließlich durch Produktgas auf Adsorptionsdruck aufgedrückt wird.

3. Verfahren nach Anspruch 1, dadurch gekennzeichnet, daß ein gespülter Adsorber durch nacheinander erfolgendes Einleiten von Gleichstromentspannungsgas aus der fünften, dann der dritten, zweiten und schließlich der ersten Gleichstromentspannungsphase aus vier verschiedenen Adsorbern und schließlich durch Produktgas auf Adsorptionsdruck aufgedrückt wird, wobei das Entspannungsgas der fünften Gleichstromentspannungsphase dem Adsorber entnommen wird, der zuvor in seiner vierten Gleichstromentspannungsphase das Spülgas für den aufzudrückenden Adsorber geliefert hat.

4. Verfahren nach Anspruch 2 oder 3, dadurch gekennzeichnet, daß während der letzten im Druckausgleich durchgeführten Druckaufbauphase neben dem Entspannungsgas aus der ersten Gleichstromentspannungsphase eines zu entspannenden Adsorbers auch Produktgas in den aufzudrückenden Adsorber geführt wird.

## Claims

1. A pressure swing adsorption process for the purification or separation of a gas flow using six adsorbers operated in cyclic alternation, wherein during an adsorption phase the gas flow is conducted through an adsorber at the highest process pressure and purified gas or separated gas is discharged from the outlet end of the adsorber, where, at the end of the adsorption phase, the adsorber is subjected to a multi-stage cocurrent expansion and the thereby occurring expansion gases are used in part to build up the pressure of other previously flushed adsorbers and in part to flush another adsorber operating at the lowest process pressure, whereupon a counter-current expansion to the lowest process pressure and flushing with cocurrent expansion gas from another absorber take place and then a multi-stage pressure build-up to the adsorption pressure using cocurrent expansion gas and purified or separated product gas is carried out, characterised in that at any one time only one adsorber operates in an adsorption phase and that four or five cocurrent expansion phases are provided, of which the first three cocurrent expansion phases are carried out in pressure compensation with other respective adsorbers and the fourth cocurrent expansion phase supplies flushing gas.

2. A process as claimed in Claim 1, characterised in that the pressure of a flushed adsorber is increased to the adsorption pressure by consecutively introducing cocurrent expansion gas from the third, then the second and finally the first cocurrent expansion phase of three different adsorbers and finally by product gas.

3. A process as claimed in Claim 1, characterised in that the pressure of a flushed adsorber is increased to the adsorption pressure by consecutively introducing cocurrent expansion gas from the fifth, then the third, second and finally the first cocurrent expansion phase of four different adsorbers and finally by product gas, where the expansion gas of the fifth cocurrent expansion phase is taken from that adsorber which previously supplied, in its fourth cocurrent expansion phase, the flushing gas for the adsorber to be increased in pressure.

4. A process as claimed in Claim 2 or 3, characterised in that during the last pressure build-up phase carried out by pressure compensation, in addition to the expansion gas from the first cocurrent expansion phase of an adsorber to be depressurised, product gas is additionally introduced into the adsorber to be increased in pressure.

## Revendications

1. Procédé d'adsorption sous pressions alternées pour la purification ou la séparation en ses constituants d'un courant de gaz, à l'aide de six adsorbeurs fonctionnant avec commutation cyclique, procédé dans lequel ledit courant de gaz traverse, pendant une étape d'adsorption, un adsorbeur sous une pression maximum, et dans lequel l'on retire à la sortie dudit adsorbeur du gaz purifié ou séparé, cependant qu'après l'achèvement de l'étape d'adsorption cet adsorbeur est soumis à une détente à plusieurs étages et à courants parallèles (c'est-à-dire courants s'écoulant dans un même sens), les gaz détendus résultants étant utilisés, en partie pour augmenter la pression dans d'autres adsorbeurs rincés au préalable, et en partie pour rincer un adsorbeur soumis à une pression minimum, après quoi on procède à une détente à contre-courant jusqu'à ladite pression minimum et à un rinçage à l'aide du gaz du détente à courant parallèle provenant d'un autre adsorbeur, puis à une remise sous pression multiétagée jusqu'à la pression d'adsorption, à l'aide de gaz de détente à courant parallèle, de gaz purifié et/ou de gaz de produit séparé, caractérisé en ce qu'à tout moment un seul adsorbeur fonctionne en phase d'adsorption et en ce qu'on prévoit quatre ou cinq phases ou étapes de détente à courant parallèle avec compensation de pression par rapport à d'autres adsorbeurs, cependant que la quatrième phase de détente à courant parallèle fournit du gaz de rinçage.

2. Procédé selon la revendication 1, caractérisé en ce qu'on remet en pression un adsorbeur rincé en y introduisant successivement du gaz de détente, puis du gaz de détente à courant parallèle provenant de la deuxième phase de détente, puis du gaz de détente provenant de la deuxième phase de détente à courant parallèle et ensuite du gaz de détente provenant de la première phase de détente à courant parallèle, à partir de trois adsorbeurs différents, et en y introduisant finalement du gaz de produit, de manière à porter la pression de l'adsorbeur intéressé à la valeur de la pression d'adsorption.

3. Procédé selon la revendication 1, caractérisé en ce qu'on met en pression un adsorbeur donné en y introduisant successivement du gaz de détente à courant parallèle provenant des troisième, deuxième, puis première phase de détente à courant parallèle dans quatre adsorbeurs différents, et en y introduisant finalement du gaz de produit de manière à porter la pression dudit adsorbeur à la valeur de pression d'adsorption, le gaz de détente produit dans la cinquième phase de détente à courant parallèle étant retiré de l'adsorbeur qui avait préalablement, pendant sa quatrième phase de détente à courant parallèle, fourni le gaz de rinçage pour l'adsorbeur à remettre en pression.

4. Procédé selon la revendication 2 ou 3, caractérisé en ce que pendant la dernière phase de remise en pression accomplie par compensation de pression ou introduit dans la première phase de détente à courant parallèle d'un adsorbeur à soumettre à détente, mais aussi le gaz de produit.

**EP 0 146 124 B1**

Fig.1

| 1 | ADS | | E1 | E2 | E3 | E4 | E5 | S | B3 | B2 | B1 | B0 |
|---|-----|---|----|----|----|----|----|---|----|----|----|----|
| 2 | B1 | B0 | ADS | | E1 | E2 | E3 | E4 | E5 | S | B3 | B2 |
| 3 | B3 | B2 | B1 | B0 | ADS | | E1 | E2 | E3 | E4 | E5 | S |
| 4 | E5 | S | B3 | B2 | B1 | B0 | ADS | | E1 | E2 | E3 | E4 |
| 5 | E3 | E4 | E5 | S | B3 | B2 | B1 | B0 | ADS | | E1 | E2 |
| 6 | E1 | E2 | E3 | E4 | E5 | S | B3 | B2 | B1 | B0 | ADS | |

**Fig.2**

| 1 | ADS | | E1 | E2 | E3 | E4/1 | 2 | E5 | S | B4 | B3 | B2 | B1 | B0 |
|---|-----|---|----|----|----|------|---|----|---|----|----|----|----|----|
| 2 | B1 | B0 | ADS | | E1 | E2 | E3 | E4/1 | 2 | E5 | S | B4 | B3 | B2 |
| 3 | B3 | B2 | B1 | B0 | ADS | | E1 | E2 | E3 | E4/1 | 2 | E5 | S | B4 |
| 4 | E5 | S | B4 | B3 | B2 | B1 | B0 | ADS | | E1 | E2 | E3 | E4/1 | 2 |
| 5 | E3 | E4/1 | 2 | E5 | S | B4 | B3 | B2 | B1 | B0 | ADS | | E1 | E2 |
| 6 | E1 | E2 | E3 | E4/1 | 2 | E5 | S | B4 | B3 | B2 | B1 | B0 | ADS | |

**Fig.3**